# EUROPÄISCHE PATENTSCHRIFT

(11) **EP 1 350 590 B1**
(45) Veröffentlichungstag und Bekanntmachung des Hinweises auf die Patenterteilung: **05.07.2006**
(21) Anmeldenummer: 03007676.4
(22) Anmeldetag: 03.04.2003
(51) Int. Cl.: B23K 26/06, B23K 26/24, B23K 26/26, B23K 26/42

(54) **Verfahren und Vorrichtung zum Tiefschweissmode-Strahlschweissen mit Hilfe mindestens eines Warmenstrahls und eines Zusatzwerkstoffes**
Method and device for keyhole laser welding in combination with heating beam and filler material
Procédé et dispositif de soudage laser 'key-hole' avec l'aide d'un faisceau chauffant et d'un matériau d'apport

(30) Priorität: 04.04.2002 DE 10214949
(43) Veröffentlichungstag der Anmeldung: 08.10.2003
(73) Patentinhaber: Hydro Aluminium Deutschland GmbH, 51149 Köln (DE)
(72) Erfinder: Maier, Christof, Dr., 50735 Köln (DE); Wehner, Torsten, 53332 Bornheim (DE)
(74) Vertreter: Cohausz & Florack

(56) Entgegenhaltungen:
- EP-A- 1 057 577
- EP-A- 1 175 955
- US-A- 4 803 334
- US-A- 5 841 098
- PATENT ABSTRACTS OF JAPAN vol. 015, no. 117 (M-1095), 20. März 1991 (1991-03-20) & JP 03 008591 A (AMADA CO LTD), 16. Januar 1991 (1991-01-16)
- PATENT ABSTRACTS OF JAPAN vol. 015, no. 124 (M-1097), 26. März 1991 (1991-03-26) & JP 03 013288 A (AMADA CO LTD), 22. Januar 1991 (1991-01-22)
- PATENT ABSTRACTS OF JAPAN vol. 018, no. 396 (M-1644), 25. Juli 1994 (1994-07-25) & JP 06 114587 A (MITSUBISHI HEAVY IND LTD), 26. April 1994 (1994-04-26)

## Beschreibung

Die Erfindung betrifft ein Verfahren und eine Vorrichtung zum Strahlschweißen gemäβ dem Oberbegriff der Ansprüche 1 und 7 (siehe, z.B., EP-A-1 175 955).

Das Strahlschweißen gewinnt in zunehmendem Maße höhere Bedeutung bei der Verbindung von Metallbauteilen über eine Schweißnaht. Unter Strahlschweißverfahren versteht man im wesentlichen das Laserstrahlschweißen und das Elektronenstrahlschweißen, wobei dem Laserstrahlschweißen eine wirtschaftlich größere Bedeutung zukommt. Im weiteren wird in der Regel vom Laserstrahlschweißen die Rede sein, was jedoch nicht als Einschränkung der erfindungsgemäßen Lehre zu verstehen ist.

Beim Laserstrahlschweißen ebenso wie beim Elektronenstrahlschweißen ermöglicht die konzentrierte Energie des Strahls das Arbeiten im sogenannten Tiefschweißmode, bei dem sich die Prozesswärme im wesentlichen gleichförmig über die gesamte Fügetiefe verteilt. Hieraus resultiert zum einen eine geringere Wärmebelastung des Bauteils. Außerdem lässt sich beim Laserstrahlschweißen eine hohe Prozessgeschwindigkeit für die Herstellung von Schweißnähten herstellen, was für den wirtschaftlichen Einsatz von Hochleistungslasern ausschlaggebend ist. Es ist weiter bekannt, das Laserstrahlschweißen mit dem Lichtbogenschweißen zu kombinieren (vgl. Christof Maier, "Laserstrahl-Lichtbogen-Hybridschweißen von Aluminiumwerkstoffen", Shaker Verlag, Aachen, 1999). Man spricht dann von sogenannten Hybridschweißverfahren. Weiter ist es bekannt, mit zwei neben- oder hintereinander angeordneten Laserstrahlen im Tiefschweißmode von einer Seite (Doppelstrahlschweißen) oder von beiden Seiten (Simultanschweißen) zu arbeiten. Hierdurch wird die Prozessstabilität verbessert und eine Porenreduktion gewährleistet. Die Fortbildung dieser und anderer Strahlschweißverfahren ist Gegenstand der vorliegenden Erfindung.

Die beim Strahlschweißen erzielbaren hohen Prozessgeschwindigkeiten führen dazu, dass sich die Strahlschweißverfahren insbesondere zur Herstellung großer Schweißnahtlängen eignen. Derartige große Schweißnahtlängen treten beispielsweise bei der Herstellung von sogenannten "Tailored Blanks" auf. Unter "Tailored Blanks" versteht man ebene Metallbauteile, beispielsweise Bleche, die aus verschiedenartigen, insbesondere verschieden dicken Teilen bestehen. Häufig werden diese "Tailored Blanks" dadurch hergestellt, dass die verschiedenen Teile im Stumpfstoß bzw. I-Stoß als Stumpfnaht verschweißt werden. Zur Herstellung dieser Schweißverbindungen eignen sich aus den bereits genannten Gründen die verschiedenen Strahlschweißverfahren.

Ein weiterer Anwendungsbereich für die Strahlschweißverfahren sind die im Automobilbau zunehmend erforderlichen langen Schweißnähte zur Verbindung von stranggepressten Hohlprofilen aus Aluminiumwerkstoffen mit anderen Karosserieteilen.

Beim Laserstrahlschweißen unterscheidet man unterschiedliche physikalische Phänomene beim Auftreffen des Laserstrahls auf den metallischen Werkstoff. Abhängig von der Strahlintensität unterscheidet man bei der Wechselwirkung zwischen Laserstrahl und Metallwerkstoff zwischen dem Wärmeleitungsmode bei eher niedrigen Laserstrahlintensitäten, dem Tiefschweißmode bei mittleren Laserstrahlintensitäten und der Plasmaabschirmung bei hohen Laserstrahlintensitäten.

Beim Wärmeleitungsmode wird das Metall von der Oberfläche her aufgeschmolzen, im wesentlichen ohne dass der Laserstrahl in das Material eindringt.

Im Tiefschweißmode, der zur Herstellung von Schweißnähten zwischen Metallbauteilen überwiegend eingesetzt wird, nimmt die Verdampfung an der Metalloberfläche so weit zu, dass sich in dem Werkstück eine Dampfkapilare ausbildet. Durch die Dampfkapilare gelangt der Laserstrahl in das Werkstück und die Wärmeeinkopplung wird über die gesamte Fügezone verteilt. Man spricht hier auch von der sogenannten "Keyhole"-Bildung, da sich die Dampfkapilare in der Regel bis hin zur dem Laserstrahl abgewandten Oberfläche der Fügezone erstreckt. Relativbewegungen des Laserstrahls zum Werkstück sorgen für ein Fortschreiten der Kapilare entlang der Fügezone der Metallbauteile. Dabei schmilzt an der Schmelzfront kontinuierlich Material auf, dass um die Kapilare herumgetrieben wird und an der Schmelzrückwand unter Bildung einer schmalen Naht erstarrt. Bei der Herstellung von Schweißnähten im Stumpfstoß ist es wichtig, den Schweißprozess so zu steuern, dass die Kapilare sich, wie bereits erwähnt, gerade bis zur Unterseite der Metallbauteile erstreckt, so dass ein Verschweißen über den gesamten Querschnitt gewährleistet ist.

Bei der Plasmaabschirmung ist die Laserstrahlintensität so hoch, dass der Laserstrahl in einem abschirmenden Plasma an der Metalloberfläche absorbiert wird und nur noch geringfügig in die Oberfläche des Werkstoffes eindringen kann.

Aus der DE 100 37 109.4 oder der EP 1 175 955 A2 ist es bekannt, die Schweißnaht, insbesondere die Schweißnahtwurzel, unter Verwendung eines Vorzugsweise von einem Diodenlaser erzeugten Schmelzstrahls, im Wärmeleitungsmode zu glätten. Dies führt zu einer deutlich verbesserten Qualität der Schweißnaht.

Auch die Zusammenfassung der japanischen Patentanmeldung JP 03 008591 A beschreibt ein Verfahren, bei welchem die mit Hilfe mehrerer Schweißstrahlen erzeugte Schweißnaht, unter Verwendung eines Laserstrahls nach dem Schweißen bearbeitet wird. Dabei wird durch einen ersten Laserstrahl ein Zusatzwerkstoff auf die zu verschweißenden Metallteile geschmolzen, durch einen zweiten Schweißstrahl die Schweißnaht zwischen den metallteilen, komplett ausgebildet und anschließend die Schweißnaht durch einen dritten Laserstrahl nachbearbeitet.

Die US 5,841,098 offenbart zwar die Herstellung einer Schweißnaht zwischen zwei Metallbauteilen unter Verwendung von zwei Laserstrahlen, wobei der Zusatzwerkstoff der Prozesszone zugeführt wird. Die Verwendung eines Schweißstrahls im Tiefschweißmode, und eines Schmelzstrahls im Wärmeleitungsmode ist in diesem Dokument nicht offenbart.

Zur Formgebung des Nahtquerschnittes oder aus metallurgischen Gründen ist oftmals die Zugabe eines Zusatzwerkstoffes beim Laserstrahlschweißen von Metallbauteilen aus Aluminium oder anderen Metallen erforderlich. Insbesondere können beim Laserstrahlschweißen von "Tailored Blanks" aus Aluminium in der Nahtwurzel Gefügeausbildungen oder Heißrisse auftreten, welche die Umformeigenschaften oder mechanischen Eigenschaften negativ beeinflussen. Es ist bekannt, dass diese Probleme durch einen in der Regel drahtförmig zugeführten Zusatzwerkstoff zumindest reduziert werden können.

Bei diesem Einsatz von Zusatzwerkstoff beim Strahlschweißen ist bei den aus dem Stand der Technik bekannten Verfahren problematisch, dass, bedingt durch die geringe räumliche Ausdehnung des Schweißstrahls, der die Metallbauteile im Tiefschweißmode verbindet, und des Schmelzbades dieses Schweißstrahls, der Zusatzdraht sehr genau positioniert werden muss, um einen geeigneten Werkstoffübergang zu gewährleisten. Durch diese hohen Anforderungen an die Genauigkeit der Zufuhr des Zusatzwerkstoffes in die Prozesszone bedingt, ergeben sich leicht unerwünschte Prozessstörungen. Diese Prozessstörungen entstehen dadurch, dass der kontinuierliche Werkstoffübergang, der idealerweise über eine Schmelzbrücke vom Draht zum Schmelzbad ohne die Bildung von Tropfen oder mechanischem Kontakt zum Werkstück erfolgen sollte, durch Positionierungsungenauigkeiten gestört wird.

Darüber hinaus wird der Zusatzwerkstoff bei den bekannten Verfahren durch die Strahlenergie des Schweißstrahls beispielsweise am Ende des Zusatzwerkstoffdrahtes erwärmt und aufgeschmolzen. Die notwendige Energie wird dabei durch Beiträge aus der Strahlungsabsorption der Laserstrahlung, der Absorption von Energie aus dem laserinduzierten Plasma sowie durch über Wärmeleitung übertragene Wärmeenergie aus dem Schmelzbad bereitgestellt. Die Tatsache, dass die zum Aufschmelzen des Zusatzwerkstoffes notwendige Energie bei den bekannten Verfahren über den Schweißstrahl zur Verfügung gestellt wird, führt entweder zu einer reduzierten Prozessgeschwindigkeit, da die für das Aufschmelzen der Metallbauteile in der Prozesszone zur Verfügung stehende Energie um den Beitrag der für das Aufschmelzen des Zusatzwerkstoffes benötigten Schmelzenergie reduziert ist, oder zur Notwendigkeit des Einsatzes eines Schweißstrahllasergenerators mit höherer Leistung.

Ausgehend von dem zuvor beschriebenen Stand der Technik liegt der vorliegenden Erfindung die Aufgabe zugrunde, ein Verfahren bzw. eine Vorrichtung zum Strahlschweißen zur Verfügung zu stellen, die die Zufuhr eines Zusatzwerkstoffes bei hoher Prozesssicherheit und hoher Prozessgeschwindigkeit gewährleistet.

Gemäß einer ersten Lehre der Erfindung wird die zuvor hergeleitete und aufgezeigte Aufgabe für ein Verfahren zum Strahlschweißen dadurch gelöst, dass die Schweißnaht mit Hilfe mindestens eines Schmelzstrahls im Wärmeleitungsmode bearbeitet wird und dass der Zusatzwerkstoff der Prozesszone durch zumindest einen Teil des Strahlprofils des Schmelzstrahls hindurch zugeführt wird. Durch die Verwendung eines, ein deutlich größeres Strahlprofil aufweisenden Schmelzstrahls zur Erwärmung des Zusatzwerkstoffes wird die Prozesssicherheit deutlich verbessert, da die Anforderungen an die Positionierungsgenauigkeit erheblich reduziert werden. Im Strahlprofil des Schmelzstrahls wird der Zusatzwerkstoff durch die Absorption der Laserstrahlung des Schmelzstrahls erwärmt, bevor er den Prozessbereich, in dem der Schweißstrahl im Tiefschweißmode arbeitet, erreicht. Damit wird gleichzeitig gewährleistet, dass die zum Aufschmelzen des Zusatzwerkstoffes von dem Schweißstrahl aufzubringende Energie deutlich reduziert wird und beim Aufschmelzen des Zusatzwerkstoffes bereits im Strahlprofil des Schmelzstrahls sogar vollständig entfällt. Hierdurch wird, bei gleicher Strahlleistung des Schweißstrahls, eine höhere Prozessgeschwindigkeit gewährleistet.

Eine besonders bevorzugte Ausgestaltung erfährt das erfindungsgemäße Verfahren dadurch, dass die Schweißnahtwurzel mit Hilfe eines Schmelzstrahls bearbeitet wird und der Zusatzwerkstoff der Schweißnahtwurzel zugeführt wird. Die Zufuhr des Zusatzwerkstoffes zur Schweißnahtwurzel ist bei dem aus dem Stand der Technik bekannten Verfahren praktisch nicht möglich, da der im Bereich der Schweißnahtwurzel austretende Schweißstrahl in der Regel weder die zum Aufschmelzen des Zusatzwerkstoffes notwendige Leistung zur Verfügung stellen kann noch im Bereich der Schweißnahtwurzel stabile Prozessbedingungen für das Aufschmelzen des Zusatzwerkstoffes hergestellt werden können. Die Zufuhr des Zusatzwerkstoffes von der Schweißnahtwurzel ist jedoch wünschenswert, da diese gegenüber der Zufuhr von der Nahtoberseite unter anderem den Vorteil aufweist, dass die Aufmischung einer genügenden Menge Zusatzwerkstoff in der Nahtwurzel gewährleistet wird. Dies führt dazu, dass Gefügeausbildungen oder Heißrisse vermieden werden können, welche ansonsten die Umformeigenschaften oder die mechanischen Eigenschaften der Schweißnaht negativ beeinflussen.

Dadurch, dass die Schweißnahtwurzel mit Hilfe des Schmelzstrahls geglättet wird, wird neben einer optimierten Zufuhr des Zusatzwerkstoffes gleichzeitig eine die Eigenschaften der Schweißnaht ebenfalls verbessernde Glättung der Schweißnahtwurzel gewährleistet.

Eine weitere vorteilhafte Ausgestaltung erfährt das erfindungsgemäße Verfahren dadurch, dass der Zusatzwerkstoff im Strahlprofil des Schmelzstrahls zumindest teilweise in einen anderen Aggregatzustand überführt wird. Je nach Einstellung des Prozesses kann es vorteilhaft sein, den Zusatzwerkstoff in einen teigigen Zustand aufzuschmelzen, vollständig zu verflüssigen oder deutlich über die Schmelztemperatur zu erhitzen.

Eine weitere Optimierung der Prozessparameter kann dadurch gewährleistet werden, dass der Zusatzwerkstoff vor dem Eintritt in das Strahlprofil des Schmelzstrahls bereits vorgewärmt wird. Dies kann beispielsweise über Vorheizen durch Konvektion oder das Durchleiten eines elektrischen Stromes durch den Zusatzwerkstoff erreicht werden.

Schließlich wird das erfindungsgemäße Verfahren dadurch besonders vorteilhaft weitergebildet, dass der Zusatzwerkstoff der Schweißnaht stechend zugeführt wird. Unter einer stechenden Zufuhr des Zusatzwerkstoffes versteht man im Gegensatz zu einer schleppenden Zufuhr die Zufuhr entgegen der Materialbewegung relativ zum Schweiß- bzw. Schmelzstrahl. Die stechende Zufuhr stellt gegenüber der schleppenden Zufuhr höhere Anforderungen an die Positionierungsgenauigkeit und wird aus diesem Grunde bei den bekannten Verfahren nur selten eingesetzt. Da bei Anwendung des erfindungsgemäßen Verfahrens die Prozesssicherheit weitgehend unabhängig von der Positioniergenauigkeit des Zusatzdrahtes ist, lässt sich die stechende Zufuhr bei Verwendung des erfindungsgemäßen Verfahrens deutlich prozesssicherer verwirklichen. Grundsätzlich hat die stechende Zufuhr des Zusatzwerkstoffes den Vorteil, dass die dem Prozessbereich bei schleppender Zufuhr vorgelagerte Störkontur durch die Drahtzufuhr wegfällt. Hierdurch wird die Zugänglichkeit der Schweißnaht vor der Prozesszone verbessert, wodurch sich Nahtverfolgungssensoren näher am Prozessbereich installieren lassen, was wiederum zur Folge hat, dass die Prozesssicherheit weiter verbessert wird.

Gemäß einer zweiten Lehre der Erfindung wird die oben hergeleitete und aufgezeigte Aufgabe für eine Vorrichtung zum Strahlschweißen mit einem Schweißstrahlgenerator zur Erzeugung eines Schweißstrahls und einer Zusatzwerkstoffzufuhr zum Zuführen eines Zusatzwerkstoffes dadurch gelöst, dass ein Schmelzstrahlgenerator zur Erzeugung eines Schmelzstrahls vorgesehen ist und der Zusatzwerkstoff über die Zusatzwerkstoffzufuhr der Prozesszone durch zumindest einen Teil des Strahlprofil des Schmelzstrahls hindurch zuführbar ist.

Zu den mit der Vorrichtung zum Strahlschweißen gemäß der zweiten Lehre der Erfindung gewährleisteten Vorteile wird auf die Beschreibung der Vorteile des Verfahrens gemäß der ersten Lehre der Erfindung verwiesen.

Es existieren nun eine Vielzahl von Möglichkeiten, das erfindungsgemäße Verfahren bzw. die erfindungsgemäße Vorrichtung zum Strahlschweißen auszugestalten und weiterzubilden. Hierzu wird beispielsweise verwiesen einerseits auf die dem Patentanspruch 1 nachgeordneten Patentansprüche andererseits auf die Beschreibung eines Ausführungsbeispiels in Verbindung mit der Zeichnung. In der Zeichnung zeigt
- Fig. 1: im Schnitt die Prozesszone bei einem aus dem Stand der Technik bekannten Verfahren zum Strahlschweißen bei Zufuhr eines Zusatzwerkstoffes,
- Fig. 2a), b): die Intensitätsverteilung des Laserlichts in Vorschubrichtung bei einer aus dem Stand der Technik bekannten Verfahren und der erfindungsgemäßen Anordnung,
- Fig. 3: im Schnitt die Prozesszone eines ersten Ausführungsbeispiels eines erfindungsgemäßen Verfahrens,
- Fig. 4: im Schnitt die Prozesszone eines zweiten Ausführungsbeispiels eines erfindungsgemäßen Verfahrens,
- Fig. 5a), b): im Schnitt die Prozesszone eines dritten Ausführungsbeispiels des erfindungsgemäßen Verfahrens mit schleppender und stechender Zufuhr des Zusatzwerkstoffes.

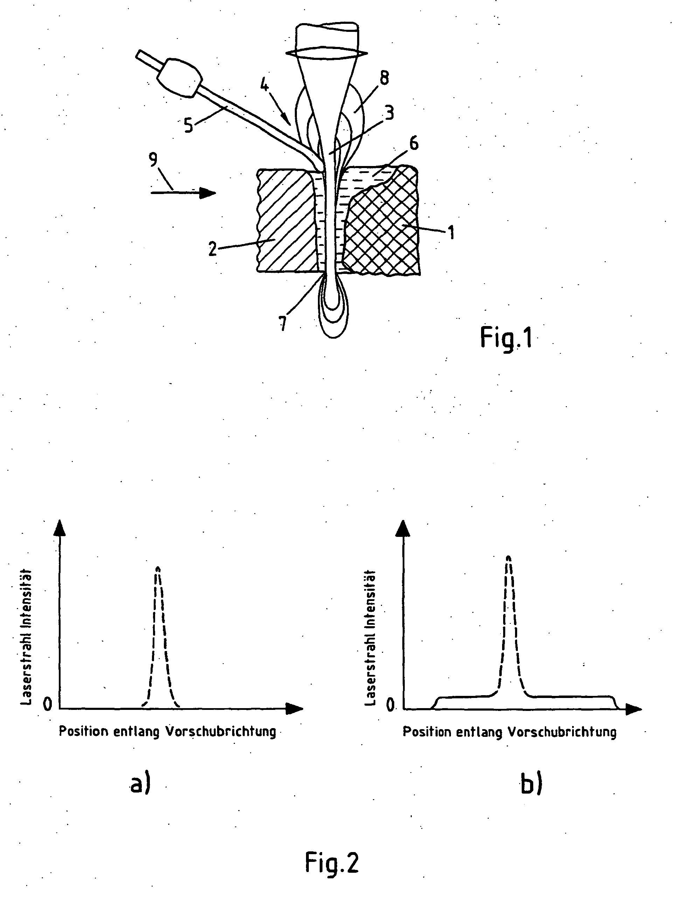

Aus dem in Fig. 1 dargestellten Schnitt durch die Prozesszone bei einem aus dem Stand der Technik bekannten Verfahren zum Strahlschweißen bei welchem eine Schweißnaht 1 im Fügebereich 2 zwischen zwei Metallbauteilen mit Hilfe eines Schweißstrahls 3 im Tiefschweißmode hergestellt wird und bei welchem beim Schweißen im Bereich der Prozesszone 4 ein Zusatzwerkstoff als Draht 5 zugeführt wird, ist ersichtlich, dass die Anforderungen an die Positionierung des Drahtes 5 aufgrund der geringen Ausdehnung des Strahlprofils des Schweißstrahls 3 relativ hoch sind. Dies führt zu einer deutlich beeinträchtigten Prozesssicherheit.

Darüber hinaus wird aus Fig. 1 weiter deutlich, dass die Schmelzenergie für den aus einem Zusatzwerkstoff bestehenden Draht 5 ausschließlich von dem Schweißstrahl 3 aufgebracht werden muss, so dass die zum Aufschmelzen der Metallbauteile verbleibende Schweißenergie um einen entsprechenden Betrag verringert wird.

Der in Fig. 1 gestrichelt schraffierte Bereich stellt die Schmelzzone 6 dar, die sich im Tiefschweißmode um das Keyhole 7 bildet, in welchem der Schweißstrahl 3 ein sich teilweise aus dem Keyhole 7 in die angrenzende Umgebung erstreckendes Plasma 8 erzeugt. Die Materialbewegung der Metallbauteile wird durch den Pfeil 9 angedeutet.

In Fig. 2a) ist der aus dem Stand der Technik bekannte Intensitätsverlauf der Laserstrahlung des Schweißstrahls 3 entlang der Vorschubrichtung des Materials dargestellt. Es ist deutlich zu erkennen, dass die Laserstrahlung mit hoher Intensität auf einen engen räumlichen Bereich begrenzt ist.

Demgegenüber zeigt Fig. 2b) die Laserstrahlintensität entlang der Vorschubrichtung bei einer Überlagerung eines Schweißstrahls und eines Schmelzstrahls mit geringerer Intensität. Es ist wiederum deutlich zu erkennen, dass der räumliche Bereich, der von der Laserstrahlung abgedeckt wird, deutlich größer ist.

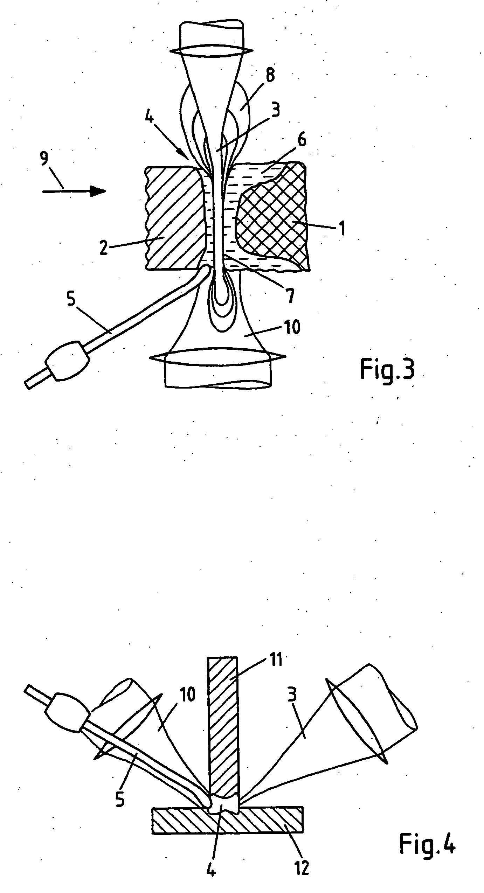

Aus dem in Fig. 3 dargestellten Schnitt durch die Prozesszone, der die Verwirklichung eines ersten Ausführungsbeispiels der Erfindung dargestellt, ist deutlich zu erkennen, dass die Schweißnaht, nämlich die Schweißnahtwurzel, mit Hilfe eines Schmelzstrahls 10 im Wärmeleitungsmode bearbeitet wird und dass der Zusatzwerkstoff als Draht 5 durch zumindest einen Teil des Strahlprofils des Schmelzstrahls 10 hindurch zugeführt wird. Es ist ersichtlich, dass einerseits die Anforderungen an die Positioniergenauigkeit des aus einem Zusatzwerkstoff bestehenden Drahtes 5 aufgrund der größeren räumlichen Ausdehnung des Schmelzstrahls 10 geringer sind, wodurch die Prozesssicherheit erhöht wird, und die Schmelzwärme zum Aufschmelzen des als Draht 5 zugeführten Zusatzwerkstoffes zumindest zum Teil durch den Schmelzstrahl 10 erbracht wird, wodurch eine Steigerung des Prozessgeschwindigkeit bei konstanter Strahlleistung des Schweißstrahls gewährleistet ist.

Darüber hinaus ermöglicht die Zufuhr des Zusatzwerkstoffes zur Schweißnahtwurzel die Aufmischung einer genügenden Menge Zusatzwerkstoff in der Nahtwurzel, wodurch zum Beispiel bei heißrissempfindlichen Legierungen die Bildung von Nahtfehlern zumindest deutlich reduziert wird. Außerdem erfolgt aufgrund der Überdeckung des Schmelzbades 6 in Richtung der Materialbewegung hinter dem Keyhole 7 gleichzeitig einer Glättung der Schweißnahtwurzel, die ebenfalls zu einer Reduzierung von Schweißdefekten führt.

Der in Fig. 4 dargestellte Schnitt durch die Prozesszone zeigt die Verwirklichung eines zweiten Ausführungsbeispiels der Erfindung, bei dem zwei Metallbauteile im T-Stoß verschweißt werden. Die Materialbewegung erfolgt bei dem in Fig. 4 dargestellten Ausführungsbeispiel senkrecht zur Darstellungsebene. Die Metallbauteile 11, 12 werden im T-Stoß mit Hilfe des Schweißstrahls 3 miteinander verschweißt, wobei gleichzeitig der Nahtwurzel über einen Draht 5 ein Zusatzwerkstoff zugeführt wird, der zumindest teilweise mit Hilfe eines Schmelzstrahls 10 aufgeschmolzen wird. Das erfindungsgemäße Verfahren erlaubt das Verschweißen von zwei Metallbauteilen wie dargestellt im Stumpfstoß, im T-Stoß und anderen Stößen.

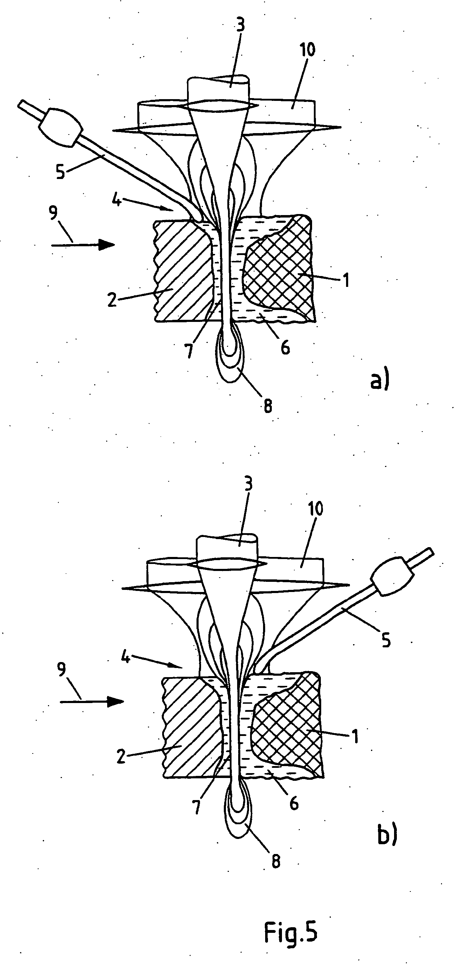

Die Möglichkeiten der schleppenden und stechenden Zufuhr des Zusatzwerkstoffs über einen Draht 5 ist in Fig. 5a) und b) vergleichend dargestellt. Es ist ohne weiteres ersichtlich, dass bei der in Fig. 5b) dargestellten stechenden Zufuhr des Drahtes die bei schleppender Zufuhr der Prozesszone 4 vorgelagerte Störkontur durch die Drahtzufuhr wegfällt. Hierdurch wird die Zugänglichkeit zum Fügebereich verbessert und die zur Prozesssteuerung eingesetzten Nahtverfolgungssensoren lassen sich näher am Prozessbereich installieren, wodurch die Prozesssicherheit und/oder die Prozessgeschwindigkeit verbessert werden.

Wie aus den Figuren ersichtlich, kann bei Verwirklichung des erfindungsgemäßen Verfahrens die Zufuhr des Zusatzwerkstoffes sowohl von der Nahtoberseite als auch von der Nahtunterseite her erfolgen. Je nach Anwendungsfall kann der Zusatzwerkstoff jedoch auch von beiden Seiten zugeführt werden.

Ebenfalls kann der Zusatzwerkstoff sowohl gegen die Richtung der Schwerkraft als auch in Richtung der Schwerkraft erfolgen. Dies hat abhängig von den bearbeiteten System verschiedene Vor- und Nachteile.

Neben der Zufuhr des Zusatzwerkstoffes in der Ebene der Materialbewegung und der Schweißstrahlen 3, 10 ist bei dem erfindungsgemäßen Verfahren auch ohne weiteres eine Zufuhr des Zusatzwerkstoffes mit einem Winkel relativ zur von der Materialbewegung und den Schweißstrahlen 3, 10 aufgespannten Ebene, beispielsweise seitlich, möglich.

Die Entkopplung der Erwärmung des Zusatzwerkstoffes bis hin zum Aufschmelzen desselben von der unmittelbaren Prozesszone des Schweißstrahls ermöglicht das Einstellen einer geometrischen Anordnung derart, dass der Zusatzdraht in das Schmelzbad ausgerichtet ist, ohne in geometrischer Verlängerung die unmittelbare Prozesszone des Schweißstrahls zu erreichen. Es kann jedoch auch gewünscht sein, dass der Zusatzwerkstoffdraht zumindest teilweise den Bereich der hohen Intensität vor der Schmelzbadoberfläche erreicht.

Der Drahtdurchmesser, die Drahtgeschwindigkeit, die Intensitätsverhältnisse und die geometrische Anordnung können derart gewählt werden, dass der Zusatzwerkstoffdraht vor Erreichen des vom Schweißstrahl abgedeckten Raumbereiches bzw. des Schmelzbades bereits aufgeschmolzen ist oder aber lediglich erwärmt aber noch nicht aufgeschmolzen ist. In letzterem Fall wird der Zusatzwerkstoffdraht aus dem festen oder teigigen Zustand erst im Bereich der hohen Strahlintensität des Schweißstrahls bzw. unter Einwirkung der Wärme aus dem Schmelzbad aufgeschmolzen

Das gleichzeitige Aufschmelzen bzw. Erwärmen des Zusatzwerkstoffdrahtes und die Glättung der Nahtoberfläche wird durch eine Anpassung der räumlichen Verteilung der Intensität des Schweißstrahls und des Schmelzstrahls gewährleistet. Hierzu kann etwa der vorzugsweise von einem Diodenlaser erzeugte Schmelzstrahl dem vorzugsweise von einem Nd:YAG-Laser erzeugten Schweißstrahl so überlagert werden, dass diesem Schweißstrahl ein Teil des Schmelzstrahls vorläuft und den Zusatzwerkstoffdraht abschmilzt und der andere Teil diesem nachläuft und die Nahtoberfläche glättet.

Eine weitere denkbare Variante besteht in der Einstellung von Drahtdurchmesser, Drahtgeschwindigkeit, Intensitätsverhältnissen und der geometrischen Anordnung derart, dass der Zusatzwerkstoff im Bereich niedriger Intensität vor dem Bereich der hohen Intensität des Schweißstrahls aufschmilzt und auf dem festen bzw. mit dem hierbei bereits aufgeschmolzenen Grundmaterial wieder erstarrt und erst bei Erreichen der unmittelbaren Prozesszone des im Tiefschweißmode arbeitenden Schweißstrahls wieder aufgeschmolzen wird.

Eine weitere Prozessoptimierung kann beispielsweise dadurch erreicht werden, dass der Zusatzwerkstoff über eine Variation der Zusatzwerkstoffdrahtvorschubgeschwindigkeit und/oder der Laserstrahlleistung gepulst zugeführt wird. Auch kann der Zusatzwerkstoff statt drahtförmig beispielsweise auch pulverförmig zugeführt werden.

Die Verwirklichung des erfindungsgemäßen Verfahrens und der erfindungsgemäßen Vorrichtung eignet sich insbesondere zur Verbesserung der Nahtqualität beim Verschweißen von Metallbauteilen aus einer Aluminiumlegierung. Die Herstellung einer guten Nahtqualität beim Strahlschweißen von Metallbauteilen aus Aluminiumlegierungen stellen in der Regel höhere Anforderungen an den Schweißprozess als beispielsweise das Verschweißen von Metallbauteilen aus Eisenlegierungen.

## Patentansprüche

1. Verfahren zum Strahlschweißen, bei welchem eine Schweißnaht (1) zwischen zwei Metallbauteilen zumindest mit Hilfe eines Schweißstrahls (3) im Tiefschweißmode (7) hergestellt wird und die Schweißnaht (1) mit Hilfe mindestens eines Schmelzstrahls (10) im Wärmeleitungsmode bearbeitet wird,
**dadurch gekennzeichnet, dass** beim Schweißen im Bereich der Prozesszone ein Zusatzwerkstoff (5) zugeführt wird und dass der Zusatzwerkstoff (5) der Prozesszone durch zumindest einen Teil des Strahlprofils des Schmelzstrahls (10) hindurch zugeführt wird.

2. Verfahren nach Anspruch 1,
**dadurch gekennzeichnet, dass** die Schweißnahtwurzel mit Hilfe eines Schmelzstrahls bearbeitet und der Zusatzwerkstoff (5) der Schweißnahtwurzel zugeführt wird.

3. Verfahren nach Anspruch 2,
**dadurch gekennzeichnet, dass** die Schweißnahtwurzel mit Hilfe des Schmelzstrahls (10) geglättet wird.

4. Verfahren nach einem der Ansprüche 1 bis 3,
**dadurch gekennzeichnet, dass** der Zusatzwerkstoff (5) im Strahlprofil des Schmelzstrahls (10) zumindest teilweise in einen anderen Aggregatzustand überführt wird.

5. Verfahren nach einem der Ansprüche 1 bis 4,
**dadurch gekennzeichnet, dass** der Zusatzwerkstoff (5) vor dem Eintritt in das Strahlprofil des Schmelzstrahls (10) vorgewärmt wird.

6. Verfahren nach einem der Ansprüche 1 bis 5,
**dadurch gekennzeichnet, dass** der Zusatzwerkstoff (5) der Schweißnaht (1) stechend zugeführt wird.

7. Vorrichtung zum Strahlschweißen zur Verwirklichung eines Verfahrens nach einem der Ansprüche 1 bis 6, mit einem Schweißstrahlgenerator zur Erzeugung eines Schweißstrahls (3) im Tiefschweißmode (7) und einem Schmelzstrahlgenerator zur Erzeugung eines Schmelzstrahls (10) im Wärmeleitungsmode
**dadurch gekennzeichnet, dass** eine Zusatzwerkstoffzufuhr zum Zuführen eines Zusatzwerkstoffes (5), vorgesehen ist und der Zusatzwerkstoff (5) über die Zusatzwerkstoffzufuhr der Prozesszone durch zumindest einen Teil des Strahlprofils des Schmelzstrahls (10) hindurch zuführbar ist.

## Claims

1. A beam welding method in which a weld joint (1) is produced between two metallic components via at least one welding beam (3) in deep welding mode (7) and the weld joint (1) is treated via at least one welding beam (10) in heat conductance mode (1),
**characterised in that**
a filler material (5) is applied when welding in the area of the processing zone, and that the filler material (5) is applied to the processing zone through at least a part of the beam profile of the welding beam (10).

2. The method in accordance with claim 1,
**characterised in that**
the root of the weld joint is treated via a welding beam and the filler material (5) is applied to the root of the weld joint.

3. The method in accordance with claim 2,
**characterised in that**
the root of the weld joint is smoothed via the welding beam (10).

4. The method in accordance with any of claims 1 to 3,
**characterised in that**
at least some of the filler material (5) in the beam profile of the welding beam (10) is converted to a different aggregate state.

5. The method in accordance with any of claims 1 to 4,
**characterised in that**
the filler material (5) is preheated before the welding beam (10) is introduced into the beam profile.

6. The method in accordance with any of claims 1 to 5,
**characterised in that**
the filler material (5) is applied to the weld joint (1) in penetrating manner.

7. A beam welding device for carrying out a method in accordance with any of claims 1 to 6, having a welding beam generator for producing a welding beam (3) in deep welding mode (7) and a welding beam generator for producing a welding beam (10) in heat conductance mode,
**characterised in that**
a filler material supply means is provided for supplying a filler material (5) and the filler material (5) can be applied to the processing zone via the filler material supply means through at least a part of the beam profile of the welding beam (10).

## Revendications

1. Procédé pour le soudage par faisceaux dans lequel, un joint de soudage (1) est réalisé entre deux éléments métalliques à l'aide d'au moins, une soudure par faisceau (3), sous forme de soudure profonde (7) et dans lequel la soudure conduit un matériau additif (5) à la zone du procédé, **caractérisé en ce que,** le joint de soudage (1) est élaboré moyennant la conduction de la chaleur à l'aide, d'au moins, un faisceau de fusion (10) et **en ce que** le matériau additif (5) est conduit, à travers la zone du procédé moyennant, au moins, un élément du profilé du faisceau de fusion (10).

2. Procédé, selon la revendication 1, **caractérisé en ce que,** à l'aide d'un faisceau de fusion, la racine de la soudure est élaborée et le matériau additif (5) de la racine de la soudure est conduit.

3. Procédé, selon la revendication 2, **caractérisé en ce que** la racine de la soudure est lissée à l'aide du faisceau de fusion (10).

4. Procédé, selon l'une des revendications 1 à 3, **caractérisé en ce que** le matériau additif (5) est transporté dans le profilé du faisceau de fusion (10), au moins de façon partielle, dans un autre état d'agrégation.

5. Procédé, selon l'une des revendications 1 à 4, **caractérisé en ce que** le matériau additif (5) est préchauffé préalablement à l'entrée du faisceau de fusion (10) dans le profilé.

6. Procédé, selon l'une des revendications 1 à 5, **caractérisé en ce que** le matériau additif (5) du joint de soudage (1) est conduit à ras.

7. Dispositif de soudage par faisceaux pour la réalisation d'un procédé, selon l'une des revendications 1 à 6, avec un générateur de faisceaux de soudage pour la production d'un faisceau de soudage (3), sous forme de soudage profond (7), et une charge de matériau additif pour la conduction d'un matériau additif (5), **caractérisé en ce qu'**un générateur de faisceaux de soudage est prévu pour la production d'un faisceau de fusion (10) moyennant la conduction de chaleur et le matériau additif (5) peut être conduit sur la charge de matériau additif de la zone du procédé, à travers, d'au moins, un élément du profilé du faisceau de fusion (10).
